# EUROPEAN PATENT SPECIFICATION

(11) **EP 3 693 130 B1**
(45) Date of publication and mention of the grant of the patent: **29.11.2023**
(21) Application number: 18864394.4
(22) Date of filing: 02.10.2018
(51) Int. Cl.: B23Q 17/24, B23Q 3/155, B23Q 17/20, G01B 11/24, B23Q 3/157, B23Q 1/62

(54) **MACHINING APPARATUS**
BEARBEITUNGSVORRICHTUNG
APPAREIL D'USINAGE

(30) Priority: 06.10.2017 JP 2017196158
(43) Date of publication of application: 12.08.2020
(73) Proprietor: Hexagon Metrology Kabushiki Kaisha, Sagamihara-shi, Kanagawa 252-0132 (JP)
(72) Inventor: SUZUKI, Kengo, Hamamatsu-shi Shizuoka 434-0043 (JP); SUZUKI, Satoshi, Hamamatsu-shi Shizuoka 434-0043 (JP); WIEST, Christoph, Waldburg 88289 (DE)
(74) Representative: Kaminski Harmann
(86) International application number: PCT/JP2018/036901
(87) International publication number: WO 2019/069933

(56) References cited:
- EP-A1- 1 398 598
- WO-A1-2014/132845
- JP-A- H1 096 616
- JP-A- H05 318 280
- JP-A- 2003 254 728
- JP-A- 2007 086 953
- JP-A- 2007 086 953
- JP-A- 2010 221 314
- JP-A- 2010 221 314
- US-A1- 2004 176 229

## Description

### TECHNICAL FIELD

The present invention relates to machining apparatus.

### BACKGROUND ART

CNC machining apparatuses are conventionally known in which a workpiece that is opposed to a tool mounted on a spindle is processed while being moved in three axial directions with computer numerical control.

For example, the CNC machining apparatus disclosed in Patent Literature 1 has a touch probe for measuring the surface shape of a workpiece. This CNC machining apparatus is configured so that, after processing a workpiece with a tool mounted on a spindle, the tool used in the processing can be exchanged with the touch probe and the surface shape of the workpiece can be measured with the touch probe mounted on the spindle.

Meanwhile, a machining apparatus called a machining center is known which includes a tool magazine that stores a plurality of types of tools, and an automatic tool changing device that can exchange tools in accordance with the types of processing. A single machining center is capable of performing various types of processing. The tool magazine stores tools and can also store a non-contact sensor for measuring the surface shape of a workpiece. The tool used in the processing can be exchanged with the non-contact sensor by means of the automatic tool changing device. With the machining center, the surface shape of a workpiece can be measured without the need of transferring the workpiece out of the CNC machining apparatus so that the workpiece can be measured on an outside measuring instrument. Thus, the surface shape of a workpiece can be measured more quickly after the workpiece has been processed. Further, the machining center can measure the surface shape of the entirety of a workpiece prior to processing. Thus, the surface shape of the entirety of a workpiece can be grasped before the workpiece is processed. The machining center can start processing of a workpiece efficiently without the tool tooth hitting the workpiece. Another example for a CNC machining apparatus according to the state of the art is disclosed in Patent Literature 2.

### PRIOR ART REFERENCES

### Patent Documents

Patent document 1: JP 2013-088341A
Patent document 2: JP 2007-086953A

### SUMMARY OF INVENTION

### Problems to be Solved by the Invention

Conventional three-axial (XYZ directions) CNC machining apparatuses encounter difficulties in measuring the surface shape of the lateral side of a workpiece. That is, when the movement of a workpiece is limited to three axial directions, a laser light is not accessible to the lateral side of the workpiece and can hardly measure the surface shape of the workpiece. Five-axial CNC machining apparatuses can apply a laser light to the lateral side of a workpiece. However, the adoption of five-axial CNC machining apparatuses is limited due to the facts that they are large and expensive.

The present invention has been made in light of the problems discussed above. It is therefore an object of the present invention to provide a machining apparatus capable of measuring the surface shape of the lateral side of a workpiece.

### Means for Solving the Problems

A machining apparatus as defined in appended claim 1 is provided.

### Effects of the Invention

The machining apparatus provided according to the present invention can measure the surface shape of the lateral side of a workpiece.

### BRIEF DESCRIPTION OF DRAWINGS

[FIG. 1] FIG. 1 is a perspective view of a machining apparatus.
[FIG. 2] FIG. 2 is a perspective view of a sensor head.
[FIG. 3] FIG. 3 is a front view of a sensor head.
[FIG. 4] FIG. 4 is a side view of a sensor head.
[FIG. 5] FIG. 5 is a block diagram illustrating an inside configuration of a sensor head.
[FIG. 6] FIG. 6 is a perspective view of a non-contact sensor.
[FIG. 7] FIG. 7 is a side view of a non-contact sensor housed in a sensor head.
[FIG. 8] FIG. 8 is a top view of a sensor head.
[FIG. 9] FIG. 9 is a view illustrating an effect obtained by applying a laser light in an oblique direction to a workpiece.
[FIG. 10] FIG. 10 is a view illustrating another effect obtained by applying a laser light in an oblique direction to a workpiece.
[FIG. 11] FIG. 11 is a view illustrating an effect obtained by a light detection unit.

### MODE FOR CARRYING OUT THE INVENTION

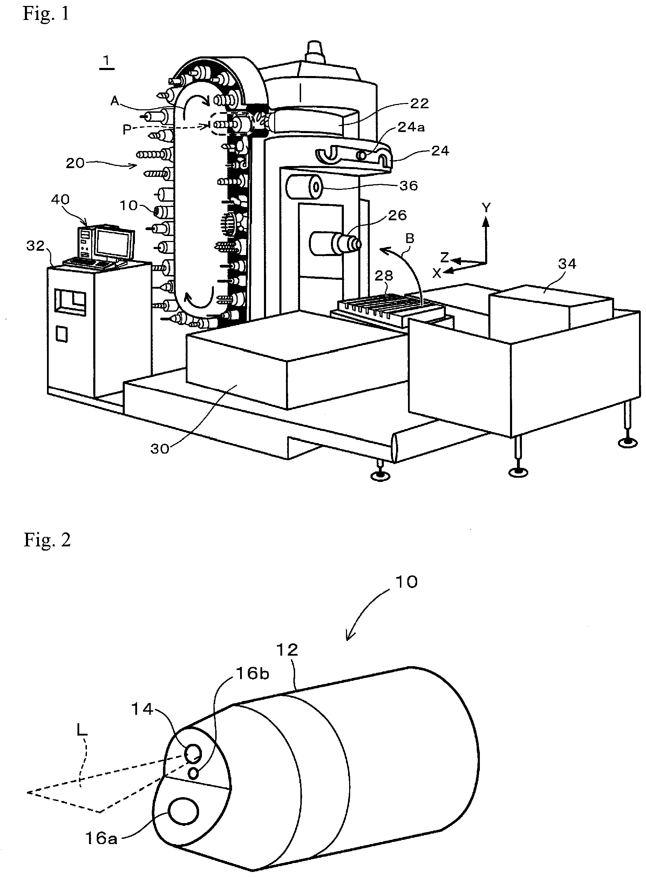

Hereinbelow, machining apparatus according to embodiments of the present invention will be described with reference to the drawings. FIG. 1 is a perspective view showing the appearance of a machining apparatus according to an embodiment. The machining apparatus 1 illustrated in FIG. 1 is a machine generally called a three-axial horizontal machining center. The machining apparatus 1 includes a tool magazine 20, an intermediate arm 22, an auto tool changer (ATC) arm 24, a spindle 26, a pallet 28, a table 30, a numerical control (NC) device 32 and a cutting oil tank 34.

Multiple types of tools are housed in the tool magazine 20. The tool magazine 20 is capable of rotating all the housed tools in the direction indicated by arrow A in FIG. 1. The tool magazine 20 is able to move a tool used for processing to a home position P.

The intermediate arm 22 picks up the tool that has been moved to the home position P, from the tool magazine 20 and passes it to the ATC arm 24. The ATC arm 24 is rotated about a shaft 24a and mounts the tool received from the intermediate arm 22 onto the spindle 26. In the case the tool is already attached to the spindle 26, the ATC arm 24 removes the attached tool from the spindle 26 followed by attaching the tool received from the intermediate arm 22 to the spindle 26. After having been removed from the spindle 26, the tool is returned to the home position P of the tool magazine 20 by the intermediate arm 22. In this manner, the intermediate arm 22 and the ATC arm 24 can exchange tools mounted on the spindle 26 in accordance with the types of workpieces or the types of processing.

The tool magazine 20 corresponds to the "housing unit" in the present invention. The intermediate arm 22 and the ATC arm 24 correspond to the "automatic tool changing device" in the present invention.

A workpiece to be processed by the machining apparatus 1 is placed on the pallet 28 and fixed thereto. The pallet 28 is rotated in the direction indicated by arrow B in FIG. 1 and thereby rises up to cause the workpiece to oppose the tool mounted on the spindle 26. The table 30 can move the pallet 28 in the X-axial, Y-axial and Z-axial directions shown in FIG. 1 in accordance with control signals output from the NC device 32. The machining apparatus can process the workpiece by rotating the tool by means of the spindle 26 while moving the workpiece in the three axial directions by means of the NC device 32 and the table 30.

After the workpiece has been processed, a sensor head 10 housed in the tool magazine 20 is moved to the home position P. Next, the tool attached to the spindle 26 is replaced with the sensor head 10 by the intermediate arm 22 and the ATC arm 24. Next, the NC device 32 causes the workpiece fixed on the pallet 28 to move in accordance with the preset pattern. Specifically, the NC device 32 causes the workpiece to move in three axial directions (X-axial, Y-axial and Z-axial directions) so as to allow a non-contact sensor included in the sensor head 10 to measure the surface shape of the workpiece. During the movement of the workpiece, the sensor head 10 outputs data corresponding to the distance d therefrom to the workpiece at predetermined time intervals (for example, every 50 psec). A personal computer 40 generates data which shows the three dimensional shape of the workpiece based on the distance data (d) output from the sensor head 10 and the data (X, Y, Z) indicating the locations of the workpiece.

A charging post 36 for charging a rechargeable battery (described later) included in the sensor head 10 is disposed within the reach of the ATC arm 24. The ATC arm 24 can move the sensor head 10 to the charging post 36. The charging post 36 has a feeder connector that can be connected with a charging connector (not shown) disposed on the surface of the sensor head 10. By fitting the charging connector into the feeder connector, the rechargeable battery included in the sensor head 10 can be charged.

For example, the rechargeable battery included in the sensor head 10 may be charged each time the sensor head 10 completes measurement. Alternatively, the rechargeable battery included in the sensor head 10 may be charged when the amount of charge stored in the rechargeable battery has fallen below a predetermined level.

As described above, the rechargeable battery may be charged by connecting the feeder connector of the charging post 36 with the charging connector of the sensor head 10. Alternatively, the rechargeable battery may be charged by non-contact charging using an electromagnetic induction system or the like

Next, the sensor head 10 will be described with reference to FIGS. 2 to 4.

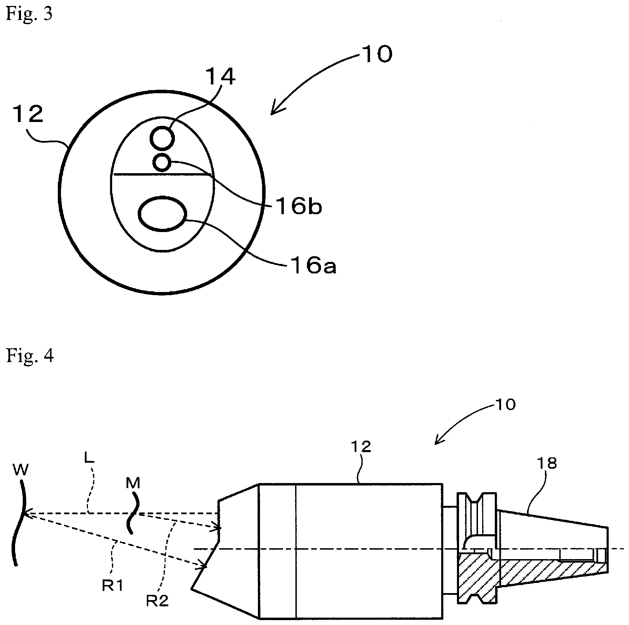

FIG. 2 is a perspective view of the sensor head 10. FIG. 3 is a front view of the sensor head 10. FIG. 4 is a side view of the sensor head 10.

As illustrated in FIGS. 2 to 4, the sensor head 10 includes a substantially cylindrical body 12 and a collet chuck 18 having substantially circular truncated cone shape. The collet chuck 18 can be removably coupled to the spindle 26.

A light emitting window 14, a first light receiving window 16a and a second light receiving window 16b are provided on the front end of the body 12. The light emitting window 14 is disposed to pass a line laser light L therethrough to the workpiece W. The first light receiving window 16a is disposed to receive a light (reflected light R1) reflected from the surface of the workpiece W. The second light receiving window 16b is disposed to receive a light (reflected light R2) reflected from the surface of an object M present in the vicinity of a light irradiation unit 50 described later.

The collet chuck 18 is fitted on the rear end of the body 12. The collet chuck 18 has the same shape as the collet chucks of the tools housed in the tool magazine 20. The collet chuck 18 allows the sensor head 10 to be mounted on the spindle 26 in the same manner as the tools housed in the tool magazine 20.

The oil resistance and waterproof performance of the sensor head 10 is preferably IP67 or above in the IP rating. Specifically, the protection on the human body and against the ingress of solid matters (the first digit) is preferably "6" or above (dustproof), and the protection against the ingress of water (the second digit) is preferably "7" or above (protection against submersion).

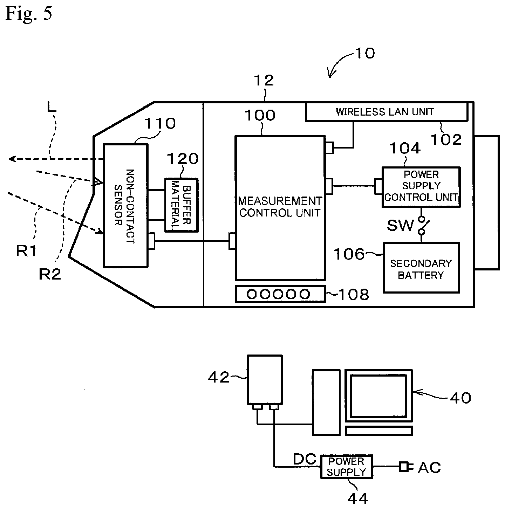

FIG. 5 is a block diagram illustrating an inside configuration of the sensor head 10.

As illustrated in FIG. 5, the body 12 of the sensor head 10 includes a measurement control unit 100, a wireless LAN unit 102, a power supply control unit 104, a rechargeable battery 106, a monitor 108, a non-contact sensor 110 and a buffer material 120.

The measurement control unit 100 receives data output from the non-contact sensor 110, for example, every 50 µsec. Based on the data received from the non-contact sensor 110, the measurement control unit 100 generates measurement data including information concerning the distance from the workpiece W. The measurement control unit 100 transmits the measurement data including information concerning the distance from the workpiece W, to the personal computer 40 via the wireless LAN unit 102.

The measurement data transmitted via the wireless LAN unit 102 is received by a wireless LAN unit 42 connected to the personal computer 40. The personal computer 40 generates data indicating the three dimensional shape of the workpiece W based on this received measurement data. A power supply 44 converts alternating current power to direct current power and supplies the electrical power to the personal computer 40 and the wireless LAN unit 42.

The non-contact sensor 110 is fixed within the body 12 through the buffer material 120. The sensor head 10 vibrates when the sensor head 10 is removed from the spindle 26. The sensor head 10 also vibrates when the sensor head 10 is moved between the spindle 26 and the tool magazine 20. The non-contact sensor 110 is fixed to the sensor head 10 through the buffer material 120, and thus the non-contact sensor 110 can be protected from vibrations of the sensor head 10.

When a switch SW is turned on, the power supply control unit 104 supplies the power generated by the rechargeable battery 106 to the measurement control unit 100. The power supply control unit 104 includes an acceleration sensor. When, for example, the acceleration sensor detects no vibrations, the power supply control unit 104 does not supply the power of the rechargeable battery 106 to the measurement control unit 100 (sleep mode). When, on the other hand, the acceleration sensor detects a predetermined acceleration pattern, the power supply control unit 104 supplies the power of the rechargeable battery 106 to the measurement control unit 100. For example, the "predetermined acceleration pattern" is a continuation of predetermined and higher values of acceleration over a predetermined or larger amount of time, or a predetermined or larger number of detections of predetermined and higher values of acceleration in a predetermined amount of time.

As described above, the power supply control unit 104 enters a sleep mode when it is likely that the sensor head 10 is not being used, thereby saving the consumption of the power of the rechargeable battery 106. When, on the other hand, the acceleration sensor detects a predetermined acceleration pattern, the power supply control unit 104 is activated and supplies the power of the rechargeable battery 106 to the measurement control unit 100.

The monitor 108 includes a plurality of LEDs. Each LED goes on and out corresponding to the on/off status of a signal within the measurement control unit 100. For example, the status of operation of the measurement control unit 100, and the status of connection between the measurement control unit 100 and other unit can be checked based on the illumination statuses of the LEDs. For example, the illumination statuses allow the operator to check the status of connection between the measurement control unit 100 and the wireless LAN unit 102, the status of connection between the measurement control unit 100 and the power supply control unit 104, and the status of connection between the measurement control unit 100 and the non-contact sensor 110.

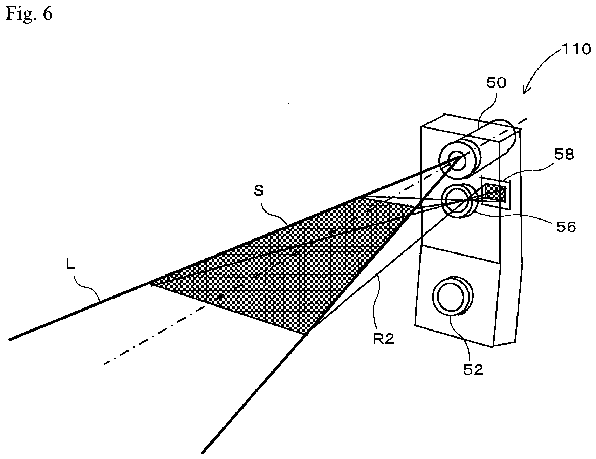

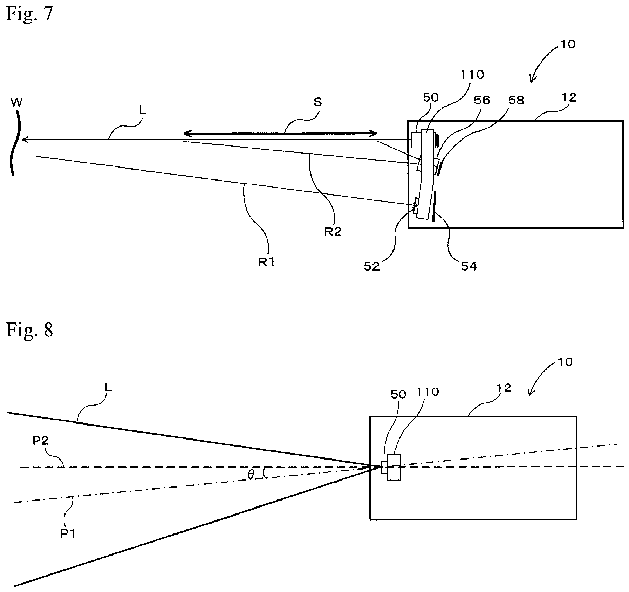

The non-contact sensor 110 included in the sensor head 10 will be described with reference to FIGS. 6 and 7.

FIG. 6 is a perspective view of the non-contact sensor 110. FIG. 7 is a side view of the non-contact sensor 110 included in the sensor head 10.

The non-contact sensor 110 applies a linear laser light (a line light) to the surface of the workpiece W and captures an image of the laser light to measure the three dimensional shape of the surface of the workpiece. The three dimensional shape can be calculated from the measurement data using a known technique such as, for example, a triangulation method or a light-section method.

As illustrated in FIGS. 6 and 7, the non-contact sensor 110 includes a light irradiation unit 50, an imaging unit 54 and an imaging lens 52. The light irradiation unit 50 applies a laser light L to the workpiece W. The imaging unit 54 captures an image of the light reflected from the surface of the workpiece W. The imaging lens 52 forms an image of the light (reflected light R1) reflected from the surface of the workpiece W on the imaging unit 54.

The laser light L emitted from the light irradiation unit 50 is a line light, and is applied linearly onto the surface of the workpiece W. The light irradiation unit 50 may be, for example, a semiconductor laser light source. The light (reflected light R1) reflected from the surface of the workpiece W is captured into an image by the imaging unit 54. For example, the imaging unit 54 includes a solid-state imaging device such as a CCD (charge coupled device) sensor or a CMOS (complementary metal oxide semiconductor) sensor. Based on the data of the image captured by the imaging unit 54, three dimensional shape data of the workpiece is calculated within the measurement control unit 100. The data is transmitted to the personal computer 40 via the wireless LAN unit 102. Using the results of the calculation, the personal computer 40 may display the three dimensional shape of the workpiece W on a monitor.

As illustrated in FIGS. 6 and 7, the non-contact sensor 110 includes a condenser lens 56 and a light detection unit 58. The condenser lens 56 is a lens for condensing the light (reflected light R2) reflected from the surface of an object present in the vicinity of the light irradiation unit 50. The light condensed by the condenser lens 56 is detected by the light detection unit 58. The light detection unit 58 may be, for example, a photodiode. The light detection unit 58 can detect lights reflected from objects existing in the region S. The region S is an area which lies near the light irradiation unit 50 and is out of reach of the detection of reflected lights by the imaging unit 54. The light detection unit 58 will be described in more detail later.

FIG. 8 is a top view of the sensor head 10. As illustrated in FIG. 8, the non-contact sensor 110 is included within the sensor head 10. The light irradiation unit 50 disposed in the non-contact sensor 110 emits a laser light L in an oblique direction to the workpiece W. Here, the "oblique direction" means that the center line P1 of the laser light L is inclined from the center line P2 of the sensor head 10. For example, the angle θ between the center line P1 of the laser light L and the center line P2 of the sensor head 10 is not less than 1° and not more than 45°, preferably not less than 5° and not more than 30°, and more preferably not less than 10° and not more than 20°. The center line P2 of the sensor head 10 is preferably coincident with the rotational axis of the sensor head 10.

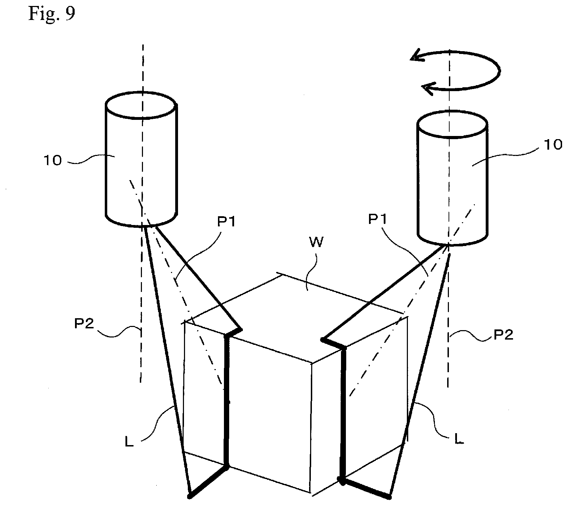

FIG. 9 is a view illustrating an effect obtained by applying the laser light L in an oblique direction to the workpiece W.

As illustrated in FIG. 9, the laser light L emitted from the light irradiation unit 50 included in the sensor head 10 is a line light and is applied linearly onto the surface of the workpiece W. The light irradiation unit 50 is included in the sensor head 10. When the sensor head 10 mounted on the spindle 26 is rotated, the laser light L is also rotated. Because the laser light L is applied in an oblique direction, the rotation of the laser light L causes the laser light L to be incident not only on the top side of the workpiece W but also on the lateral side of the workpiece W. Thus, although the NC device 32 is capable of moving the workpiece W only in the three axial directions, it is possible to apply the laser light L to the lateral side of the workpiece W and hence it is possible to measure the surface shape of the lateral side of the workpiece W.

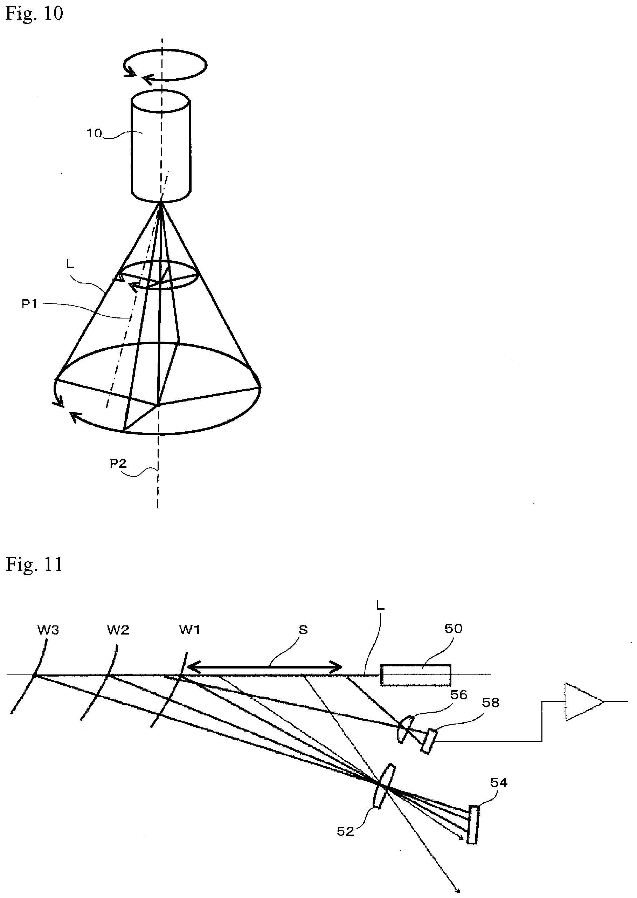

FIG. 10 is a view illustrating another effect obtained by applying the laser light L in an oblique direction to the workpiece W.

As illustrated in FIG. 10, the laser light L emitted from the light irradiation unit 50 included in the sensor head 10 is a line light and is applied linearly onto the surface of the workpiece W. When the sensor head 10 is rotated, the laser light L is also rotated. Because the laser light L is applied in an oblique direction to the workpiece W, the rotation of the laser light L causes the laser light L to be incident on a larger area. Thus, the laser light L can measure the surface shape over a larger region than before.

The machining apparatus 1 of the present embodiment has a servomotor paired with an encoder which rotates the spindle 26. The servomotor paired with an encoder enables precise control of the rotational position of the spindle 26. Further, when the sensor head 10 is mounted on the spindle 26, the rotational position of the sensor head 10 can be precisely controlled and thus the surface shape of the lateral side of the workpiece W can be measured more precisely.

FIG. 11 is a view illustrating an effect obtained at the light detection unit 58.

As illustrated in FIG. 11, the laser light L emitted from the light irradiation unit 50 is reflected from the surfaces of workpieces W1 to W3. The lights reflected from the surfaces of the workpieces W1 to W3 are incident on the imaging lens 52 and reach the imaging unit 54 such as a CCD sensor or a CMOS sensor.

As illustrated in FIG. 11, the workpiece W1 lies near the light irradiation unit 50. The workpiece W3 is located farther from the light irradiation unit 50. The workpiece W2 is positioned between the workpiece W1 and the workpiece W3. According to the principle of triangulation, the distances between the light irradiation unit 50 and the workpieces W1 to W3 can be measured. However, it is impossible to measure the distance between the light irradiation unit 50 and an object closer to the light irradiation unit 50 than the workpiece W1 because the light reflected from the object closer to the light irradiation unit 50 than the workpiece W1 does not reach the imaging unit 54. For this reason, the conventional non-contact sensors encounter difficulties in detecting an object that is present in the vicinity of the light irradiation unit 50. Further, it is difficult to avoid a collision of the light irradiation unit 50 (the sensor head 10) with the nearby object.

According to the machining apparatus 1 of the present embodiment, a light that has been reflected from an object closer to the light irradiation unit 50 than the workpiece W1 is detected by the light detection unit 58 composed of a photodiode or the like. Thus, any objects which exist in the vicinity of the light irradiation unit 50 can be detected. Further, it is possible to avoid a collision of the light irradiation unit 50 (the sensor head 10) with such nearby objects.

According to the machining apparatus 1 of the present embodiment, the rotation of the spindle 26 causes the laser light L to rotate and thus allows the laser light L to illuminate a larger area. Thus, a larger area can be inspected for the presence of any objects that may exist near the light irradiation unit 50 (see FIG. 10).

### BRIEF DESCRIPTION OF THE REFERENCE SYMBOLS

- 1: Machining apparatus
- 10: Sensor head
- 12: Body
- 18: Collet chuck
- 20: Tool magazine
- 22: Intermediate arm
- 24: ATC arm
- 26: Spindle
- 28: Pallet
- 30: Table
- 32: NC device
- 36: Charging post
- 40: Personal computer
- 50: Light irradiation unit
- 52: Imaging lens
- 54: Imaging unit
- 56: Condenser lens
- 58: Light detection unit
- 110: Non-contact sensor
- L: Laser light
- W: Workpiece

## Claims

1. A machining apparatus (1) comprising:
a mechanism (28) adapted to cause a workpiece (W) to oppose a tool mounted on a spindle,
a mechanism (30) adapted to move the workpiece (W) in three axial directions with computer numerical control,
a housing unit (20) adapted to house a plurality of types of tools,
an automatic tool changing device (22,24) adapted to pick up a tool from the housing unit (20) and to replace a tool mounted on the spindle (26) with the tool picked up, and
a non-contact sensor (110) adapted to measure the surface shape of the workpiece (W), wherein
the non-contact sensor (110) is housed in the housing unit (20),
the automatic tool changing device (22,24) is capable of picking up the non-contact sensor (110) from the housing unit (20) and replacing the tool mounted on the spindle (26) with the non-contact sensor (110),
the non-contact sensor (110) comprises a light irradiation unit (50) adapted to apply a line light
to the workpiece (W), and an imaging unit (54) adapted to capture an image of the line light reflected from the workpiece (W), and
the light irradiation unit (50) is configured to apply the line light in an oblique direction to the workpiece (W).

2. The machining apparatus (1) according to Claim 1, further comprising a light detection unit (58) adapted to detect a light reflected from an object (M) present in the vicinity of the light irradiation unit (50).

## Patentansprüche

1. Bearbeitungsvorrichtung (1), umfassend:
einen Mechanismus (28), der dazu ausgelegt ist, zu bewirken, dass ein Werkstück (W) einem auf einer Spindel montierten Werkzeug gegenüberliegt,
einen Mechanismus (30), der dazu ausgelegt ist, das Werkstück (W) in drei axialen Richtungen mit rechnergestützter numerischer Steuerung zu bewegen,
eine Gehäuseeinheit (20), die dazu ausgelegt ist, eine Vielzahl von Werkzeugarten unterzubringen,
eine automatische Werkzeugwechselvorrichtung (22, 24), die dazu ausgelegt ist, ein Werkzeug aus der Gehäuseeinheit (20) aufzunehmen und ein auf der Spindel (26) montiertes Werkzeug durch das aufgenommene Werkzeug zu ersetzen, und
einen berührungslosen Sensor (110), der dazu ausgelegt ist, die Oberflächenform des Werkstücks (W) zu messen, wobei der berührungslose Sensor (110) in der Gehäuseeinheit (20) untergebracht ist,
wobei die automatische Werkzeugwechselvorrichtung (22, 24) dazu imstande ist, den berührungslosen Sensor (110) aus der Gehäuseeinheit (20) aufzunehmen und das auf der Spindel (26) montierte Werkzeug durch den aufgenommenen berührungslosen Sensor (110) zu ersetzen,
der berührungslose Sensor (110) eine Lichtbestrahlungseinheit (50), die dazu ausgelegt ist, ein Linienlicht auf das Werkstück (W) anzuwenden, und eine Bildaufnahmeeinheit (54), die dazu ausgelegt ist, eine Bild des von dem Werkstück (W) reflektierten Linienlichts aufzunehmen, umfasst, und
die Lichtbestrahlungseinheit (50) dazu eingerichtet ist, das Linienlicht in einer Schrägrichtung auf das Werkstück (W) anzuwenden.

2. Bearbeitungsvorrichtung (1) nach Anspruch 1, ferner umfassend eine Lichterkennungseinheit (58), die dazu ausgelegt ist, ein Licht zu erkennen, das von einem in der Nähe der Lichtbestrahlungseinheit (50) vorhandenen Objekt (M) reflektiert wird.

## Revendications

1. Appareil d'usinage (1) comprenant :
un mécanisme (28) adapté pour faire en sorte qu'une pièce à usiner (W) s'oppose à un outil monté sur une broche,
un mécanisme (30) adapté pour déplacer la pièce à usiner (W) dans trois directions axiales avec commande numérique par ordinateur,
une unité de boîtier (20) adaptée pour loger une pluralité de types d'outils,
un dispositif de changement automatique d'outil (22, 24) adapté pour choisir un outil dans l'unité de boîtier (20) et pour remplacer un outil monté sur la broche (26) avec l'outil choisi et
un capteur sans contact (110) adapté pour mesurer la forme de la surface de la pièce à usiner (W), le capteur sans contact (110) étant logé dans l'unité de boîtier (20),
le dispositif de changement automatique d'outil (22, 24) étant capable de choisir le capteur sans contact (110) dans l'unité de boîtier (20) et de remplacer l'outil monté sur la broche (26) avec le capteur sans contact (110),
le capteur sans contact (110) comprenant une unité de rayonnement de la lumière (50) adapté pour appliquer une lumière linéaire à la pièce à usiner (W) et une unité d'imagerie (54) adaptée pour prendre une image de la lumière linéaire réfléchie par la pièce à usiner (W) et
l'unité de rayonnement de la lumière (50) étant configurée pour appliquer une lumière linéaire dans une direction oblique par rapport à la pièce à usiner (W).

2. Appareil d'usinage (1) selon la revendication 1 comprenant de plus une unité de détection de la lumière (58) adaptée pour détecter une lumière réfléchie par un objet (M) présent au voisinage de l'unité de rayonnement de la lumière (50).
